(19) Europäisches Patentamt

European Patent Office

Office européen des brevets

(11) **EP 1 040 033 B1**

(12) **EUROPÄISCHE PATENTSCHRIFT**

(45) Veröffentlichungstag und Bekanntmachung des Hinweises auf die Patenterteilung:
**06.04.2005 Patentblatt 2005/14**

(51) Int Cl.⁷: **B60T 8/00**, B60T 8/24

(21) Anmeldenummer: **98959885.9**

(86) Internationale Anmeldenummer:
**PCT/EP1998/007602**

(22) Anmeldetag: **25.11.1998**

(87) Internationale Veröffentlichungsnummer:
**WO 1999/030942 (24.06.1999 Gazette 1999/25)**

(54) **VERFAHREN ZUR ERHÖHUNG DER KIPPSTABILITÄT EINES FAHRZEUGES**

METHOD FOR IMPROVING TILT STABILITY IN A MOTOR VEHICLE

PROCEDE POUR ACCROITRE LA STABILITE AU CAPOTAGE D'UN VEHICULE

(84) Benannte Vertragsstaaten:
**DE FR GB**

(30) Priorität: **16.12.1997 DE 19755761**
       **14.05.1998 DE 19821593**
       **06.07.1998 DE 19830189**

(43) Veröffentlichungstag der Anmeldung:
**04.10.2000 Patentblatt 2000/40**

(73) Patentinhaber: **Continental Teves AG & Co. oHG**
**60488 Frankfurt (DE)**

(72) Erfinder:
 • FENNEL, Helmut
   D-65812 Bad Soden (DE)
 • KEMMLER, Frank
   D-65817 Eppstein-Bremthal (DE)
 • KIENLE, Lothar
   D-68623 Lampertheim (DE)
 • IHRIG, Hans-Georg
   D-64293 Darmstadt (DE)

(56) Entgegenhaltungen:
EP-A- 0 758 601          DE-C- 19 602 879
US-A- 3 608 925          US-A- 4 898 431

**Beschreibung**

Die vorliegende Erfindung betrifft ein Verfahren zur Erhöhung der seitlichen Kippstabilität eines mindestens zweiachsigen und zweispurigen Fahrzeuges, also eines mindestens dreirädrigen Fahrzeuges.

In T.D.Gillespies Buch "Fundamentals of Vehicle Dynamics", Society of Automotive Engineers, Inc., Warrendale 1992, Kapitel 9, S. 309-333, sind verschiedene Modelle für Überrollunfälle beschrieben. Beginnend mit einem quasistationären Modell für ein starres Fahrzeug über ein quasistationäres Modell für ein gefedertes Fahrzeug bis hin zu dynamischischen Modellen unter Berücksichtigung von Wankeigenfrequenzen werden Bedingungen für bestehende Kippgefahren berechnet.

Während es für Lastkraftwagen, Lastzüge, Busse, Kleinbusse und Geländewagen aufgrund hochliegender Schwerpunkte und/oder geringer Spurbreite schon bei Veröffentlichung des o.g. Buches bekannt war, daß bei Kurvenfahrt mit großer Wankbewegung eine Kippgefahr besteht, hat es sich erst in jüngerer Zeit gezeigt, daß sich auch Personenkraftwagen - insbesondere bei sinusartigen Lenkbewegungen - seitlich bis zum Umkippen aufschaukeln können. Eine solche Kippgefahr wird durch unsachgemäße Beladung, beispielsweise extrem einseitig oder auf dem Fahrzeugdach, erheblich erhöht, weil die Lage des Massenschwerpunktes des Fahrzeug nach oben oder zu einer Seite verlagert wird.

In DE-A-196 02 879 bzw. DE-A 197 46 889 ist ein System zur Erhöhung der Seitenstabilität bei Kurvenfahrt beschrieben, welches mit einer Neigungserfassungseinrichtung ausgestattet ist. Diese Neigungserfassungseinrichtung mißt entweder den Höhenunterschied zwischen rechter und linker Fahrzeugseite oder die Querbeschleunigung des Fahrzeugs, um den Wankwinkel zwischen der Fahrzeughorizontalen und der Fahrbahnhorizontalen zu erfassen. Wird von der Neigungserfassungseinrichtung eine Kippgefahr erkannt, wird ein gegensteuerndes Giermoment erzeugt.durch Abbremsen des kurvenäußeren Vorderrades.

Wie allerdings oben schon beschrieben, sind die zulässige Querbeschleunigung sowie der zulässige Wankwinkel abhänging von der Lage, insbesondere der Höhe des Fahzeugschwerpunkts.

Der vorliegenden Erfindung liegt daher die Aufgabe zugrunde, ein Verfahren zu schaffen, das unter Berücksichtigung auch ungünstiger Beladung einer Kippgefahr bedarfsgerecht entgegenwirkt.

Diese Aufgabe wird dadurch gelöst, daß bei einem Fahrtantritt nicht der Schwerpunkt des leeren Fahrzeuges, sondern der denkbar ungünstigste Fahrzeugschwerpunkt unter Berücksichtigung der zulässigen Fahrzeugbeladung zur Berechnung einer Stabilitätsschwelle herangezogen wird. Diese Stabilitätsschwelle kann eine Querbeschleunigung oder eine damit korrelierende Größe, beispielsweise eine Gierrate sein. Allerdings hat die Auswahl der Querbeschleunigung gegenüber der Gierrate den Vorteil, daß ein fahrzeugfest eingebauter Querbeschleunigungsmesser automatisch seitliche Fahrbahnneigungen, beispielsweise in überhöhten Kurven, berücksichtigt.

Im weiteren Fahrtverlauf wird sich an der bei Fahrtbeginn gegebenen Massenverteilung im Fahrzeug nicht allzu viel ändern: Es können andere Sitzpositionen eingenommen werden, und der Füllstand des Fahrzeugtanks sinkt. Im Verhältnis zur Fahrzeugmasse sind dies aber nur kleine und/oder langsame Änderungen. Während der Fahrt können von der Fahrzeugsensorik weitere Beobachtungen des Beschleunigungsund Verzögerungsverhaltens gemacht werden, aus denen sich genauer die tatsächliche Lage des Fahrzeugschwerpunktes berechnen läßt.

Zur näheren Beschreibung von Einzelheiten der Erfindung wird im folgenden eine Zeichnung herangezogen.

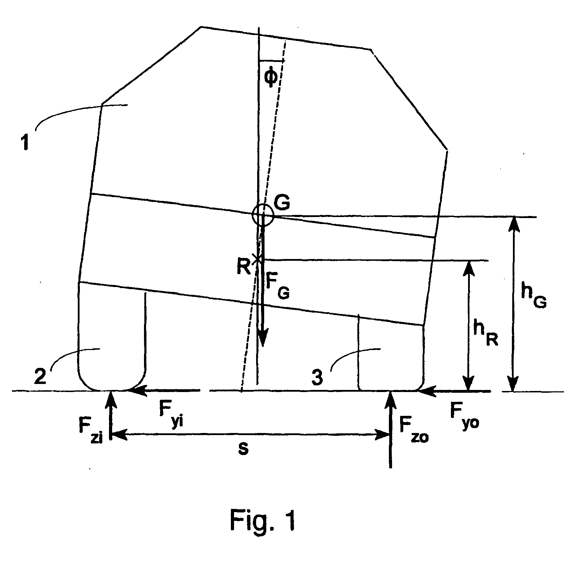

Fig. 1     zeigt in schematischer Darstellung ein vierrädriges Fahrzeug in Hinteransicht beim Durchfahren einer Linkskurve.

In der Zeichnung sind folgende Größen dargestellt:

| | |
|---|---|
| $G$ | Masseschwerpunkt des Fahrzeugs 1 |
| $h_G$ | Höhe des Masseschwerpunktes G |
| $R$ | Rotationszentrum einer Fahrzeugwankbewegung |
| $h_R$ | Höhe des Rotationszentrums R |
| $s$ | Spurbreite des Fahrzeugs 1 |
| $\phi$ | Wankwinkel |
| $F_G$ | Schwerkraft des Fahrzeugs 1 |
| $F_{yi}$ | Seitenkraft auf den kurveninneren Reifen 2 |
| $F_{zi}$ | Hochkraft auf den kurveninneren Reifen 2 |
| $F_{yo}$ | Seitenkraft auf den kurvenäußeren Reifen 3 |
| $F_{zo}$ | Hochkraft auf den kurvenäußeren Reifen 3 |

Die folgenden Betrachtungen werden ohne Einschränkung der Allgemeingültigkeit für das eine Linkskurve durchfahrende Fahrzeug 1 angestellt. Um gleichermaßen auf eine Rechtskurve anwendbar zu sein, müßten die Terme der folgenden Gleichungen jeweils mit Betragsstrichen versehen werden, was der Übersichtlichkeit halber aber unterlassen wurde.

Ein Abheben des kurveninneren Rades 2 vom Boden beginnt dann, wenn sich im fahrzeugfesten System die Hebelmomente auf den Schwerpunkt um die hier als Punkt betrachtete Radaufstandsfläche des kurvenäußeren Rades 3 aufheben. Im Gegenuhrzeigersinn ist das für kleine $\phi$ mit m als Fahrzeugmasse:

$$m^*g^* [s/2 - \phi^* (h_M - h_R)]$$

mit g = 9,81 m/s².

Im Uhrzeigersinn wirkt die virtuelle Zentrifugalkraft $-F_y = -a_y * m$ und bewirkt das Hebelmoment:

$$-m * a_{ykrit} * h_M$$

Gleichsetzung der Hebelmomente, Substitution von $\phi$ mithilfe von $R_\phi$, der dimensionslosen Wankrate $\phi * g/a_y$, die die Änderung des Wankwinkels $\phi$ (in rad) mit der Querbeschleunigung (in Vielfachen von g) angibt und Auflösung nach $a_{ykrit}$ ergibt für die kritische Querbeschleunigung, bei der das kurveninnere Rad abhebt, folgende Bedingung:

$$a_{ykrit} = \frac{g * s}{2\, h_M} * \frac{1}{1 + R_f(1 - h_R/h_M)}$$

Die kritische Querbeschleunigung ist also umso kleiner, je weiter der Masseschwerpunkt über dem Wankrotationszentrum liegt. Die Lage des Masseschwerpunktes ist daher für Aussagen über die Seitenstabilität wichtig.

Diese einfache Berechnung der kritischen Querbeschleunigung gilt nur im quasistationären Fall. Bei dynamischen Lenkmanövern mit schwingungsähnlichen Auslenkungen kann sich das Fahrzeug aufschaukeln. Daher sollte ein stabilisierendes System seinen Eintrittsschwellenwert $a_{yon}$ schon bei kleineren Querbeschleunigungen haben:

$$a_{yon} = d * a_{ykrit}$$

mit $0 < d < 1$

Die Austrittsschwelle aus einer stabilisierenden Regelung bestimmt sich analog:

$$a_{yoff} = e * a_{ykrit}$$

mit $0 < e < d$

Als zusätzliche Größe zur Erkennung einer Kippgefahr kann die Veränderung, also die zeitliche Ableitung $\dot{a}_y$ der Querbeschleunigung $a_y$ herangezogen werden, wodurch insbesondere bei wechseldynamischen Manövern ein Aufschaukeln erkannt werden kann. Eine Überschreitung eines Schwellenwertes $\dot{a}_{yon}$, der abhängig ist von aktueller und kritischer Querbeschleunigung, kann als UND-Bedingung zur Einleitung einer stabilisierenden Maßnahme eingeführt werden:

$$a_y > a_{yon}$$

und

$$\dot{a}_y > \dot{a}_{yon}$$

Oder es kann eine Gesamtbetrachtung erfolgen mit einer Stabilitätsbedingung gemäß:

$$i * a_y + j * \dot{a}_y \leq a_{ykrit}$$

mit i,j als empirisch gewonnenen fahrzeugspezifischen Parametern, wobei i dimensionslos ist und j die Dimension einer Zeit hat. Sobald dann gilt

$$i * a_y + j * \dot{a}_y > a_{ykrit},$$

wird eine stabilisierende Maßnahme eingeleitet. Selbstverständlich kann auch statt einer linearen Beziehung eine quadratische oder andere Form gewählt werden. Die am besten geeignete Beziehung wird sich gegebenenfalls durch Versuchsreihen bestimmen lassen.

Der gewählten Eintrittsbedingung entsprechend gilt dann als Austrittsbedingung:

$$a_y < a_{yoff}$$

und

$$\dot{a}_y < \dot{a}_{yoff}$$

mit $\dot{a}_{yoff} = f * \dot{a}_{yon}$ und $0 < f < 1$; oder:

$$i * a_y + j * \dot{a}_y \leq k * a_{ykrit}$$

mit $0 < k < 1$;
oder ein entsprechend komplexeres Kriterium.

Eine hohe Querbeschleunigung tritt dann auf, wenn große Seitenkräfte zwischen Reifen und Fahrbahn übertragen werden. Die Reibung im Reifenlatsch, also der Kontaktfläche zwischen Fahrbahn und Reifen bestimmt, wie hoch die übertragbare Horizontalkraft ist. Die Vektorsumme aus Längskraft und Seitenkraft kann die aus dem Reibkoeffizienten bestimmte Maximalkraft nicht überschreiten. Um eine gefährliche Querbeschleunigung zu reduzieren, kann also ein Regeleingriff vorgenommen werden, der die Längskraft mittels Bremseneingriff erhöht und demzufolge die maximal übertragbare Seitenkraft verringert. Das Fahrzeug wird dann ein untersteuerndes Verhalten annehmen, also einem größeren Kurvenradius folgen.

Ein stabilisierender Regeleingriff, der eine aktive, also automatische Bremsbetätigung beinhaltet, wird auf jeden Fall das kurvenäußere Vorderrad abbremsen. Zum einen sind bei einer Kurvenfahrt die äußere Fahrzeugseite und beim Bremsen die Vorderachse stärker belastet. Das kurvenäußere Vorderrad kann daher wesentlich höhere Kräfte zwischen Reifen und Fahrbahn übertragen als die übrigen Räder, so daß hier der größte Effekt zu erwarten ist. Zum anderen verläuft der Kraftvektor der am kurvenäußeren Vorderrad aufgebauten Längskraft auf der kurvenäußeren Seite am Fahrzeugschwerpunkt vorbei und trägt somit unterstützend zur Stabilisierung bei. Ein ähnlich unterstützender Effekt ist am kurvenäußeren Hinterrad zu beobachten. Allerdings ist hier, wenn kein Antiblockiersystem vorhanden sein sollte, Vorsicht geboten, da ein Blockieren des stärker belasteten äußeren Hinterrades vor den Vorderrädern bekanntlichzum Ausbrechen des Fahrzeughecks führen kann. Der Längskraftvektor des kurveninneren Vorderrades zeigt zwar nur bei extrem stark eingeschlagenem Lenkrad zur kurvenäußeren Seite des Schwerpunktes, so daß die Längskraft i.d.R. gegen die Stabilisierung wirkt, was aber in anbetracht der dafür reduzierten Seitenkraft nicht schwer ins Gewicht fällt. Das kurveninnere Hinterrad abzubremsen bringt keinerlei Vorteile für die Seitenstabilisierung, da dieses Rad als wenig belastetes Rad nur eine minimale Rolle bei der Seitenkraftübertragung spielt, zusätzlich einen ungünstig verlaufenden Längskraftvektor aufweist und bei Blockieren eine Schleudertendenz begünstigen würde.

Grundsätzlich sollte kein totaler Verlust der Seitenführung herbeigeführt werden, da sonst das Fahrzeug schlichtweg von der Straße rutscht, was selbstverständlich keine wünschenswerte Alternative zu einem Umkippen des Fahrzeugs darstellt.

Wenn während einer vom Fahrer veranlaßten Bremsung eine kritische Querbeschleunigung erkannt wird, müssen die vorliegenden Bremskräfte unter Berücksichtigung der gewünschten Seitenkraftreduzierung umverteilt werden, wobei sich das Gesamtbremsmoment nicht verringern darf. Solange sich die Räder auf dem ansteigenden Abschnitt der bekannten $\mu(\lambda)$-Kurve befinden, ist eine Erhöhung der Bremskraft unkritisch. Bei Erreichen des Maximums muß allerdings in Betracht gezogen werden, daß eine weitere Erhöhung des Bremsdruckes einen - wenn auch leichten - Verlust an Bremsmoment mit sich bringt.

Aus den vorgenannten Gründen empfiehlt es sich, einen Bremseingriff zur Seitenkraftreduzierung nur auf dem linear ansteigenden Ast der $\mu(\lambda)$-Kurve unterhalb der Sättigung vorzunehmen, also im sogenannten Teilbremsbereich.

Zusätzlich kann eine aktive Fahrzeugaufhängung vorgesehen sein, die den Wankwinkel zumindest teilweise kompensiert, indem die kurvenäußere Fahrzeugseite angehoben wird. Derartige Systeme sind z. B. für LKWs und Busse entwickelt worden.

Zu Fahrtbeginn wird als Stabilitätsschwelle für die Querbeschleunigung ein Wert angenommen, der sicherstellt, daß bei jeglicher - legal zulässiger - Beladung ein Umkippen durch einen Regeleingriff mit größter Wahrscheinlichkjeit vermieden werden kann, sofern physikalisch möglich. Im weiteren Verlauf einer Fahrt können durch Beobachtung der Radsensorsignale weitere Rückschlüsse auf den Ort des Masseschwerpunktes gezogen werden, die u.U. ein Heraufsetzen dieser Schwelle erlauben:

Unter der Voraussetzung, daß das vom Antriebsmotor bei Beschleunigung aufgebrachte Antriebsmoment bekannt ist, kann die Antriebskraft, also die Längskraft zwischen Reifen und Fahrbahn berechnet werden. Die Radsensoren vozugweise nichtangetriebener Räder liefern die erzielte Fahrzeuggeschwindigkeit, aus der sich die Fahrzeugbeschleunigung mittels zeitlicher Ableitung ermitteln läßt. Aus der Beschleunigung dividiert durch die Antriebkraft ergibt sich die Fahrzeugmasse. Zur Betrachtung der bei einer Wank- oder Nickbewegung bewegten Masse m wird die bekannte, fahrzeugspezifische Masse aller ungefederten Teile subtrahiert.

Ähnliche Betrachtungen lassen sich natürlich auch während einer Bremsung mit der Fahrzeugverzögerung anstellen, wobei einem Bremsdruck eine definierte Bremskraft zuzuordnen ist.

Die Abbremsung eines Fahrzeuges kann auch dazu genutzt werden, für gegebene Verzögerungen anhand von auftretenden Schlupfunterschieden an Vorder- und Hinterachse auf die vorliegende Massenverlagerung, also den Nickwinkel des Fahrzeugs zu schließen. Bei bekannten Elastizitäten in der Fahrzeugaufhängung und bekannter gefederter Masse m läßt sich aus dem Nickhebelmoment die Höhe $h_m$ des Masseschwerpunktes berechnen. Schlupfunterschiede an der Vorder- und Hinterachse können bei allradgetriebenen Fahrzeugen auch aus der Beschleunigung ermittelt werden.

Die ermittelte Höhe des Massenschwerpunktes kann dann in die Gleichung zur Berechnung der kritischen Querbeschleunigung $a_{ykrit}$ eingesetzt werden, um mit dieser entsprechend den Eintrittsschwellenwert $a_{yon}$ oder eine komplexere Eintrittsbedingung zu modifizieren.

Diese Art der Schwerpunktsermittlung kann entweder einmal unmittelbar zu Fahrtbeginn während der ersten Beschleunigungs- und Bremsmanöver durchgeführt werden, nach bestimmten Zeitintervallen wiederholt werden oder bei jeder geeigneten Bremsung und/oder Beschleunigung (vorzugsweise ohne Lenkwinkeleinschlag) durchgeführt werden.

Sollte das betreffende Fahrzeug mit einem System zur Giermomentenregelung ausgestattet sein, so sollte dieses System gewissen Modifikationen unterzogen werden. Eine Giermomentenregelung regelt die Gierrate eines Fahrzeugs auf einen Sollwert hin. Der Sollwert wird in der Regel auf einen physikalisch sinnvollen Wert begrenzt. Die physikalischen Betrachtungen berücksichtigen im allgemeinen aber nur die Reibwertverhältnisse des Straßenbelages: Bei Hochreibwert ist die maximal ansetzbare Sollgierrate höher als bei Niedrigreibwert. Allerdings besteht gerade bei Hochreibwert erhöhte Kippgefahr durch große übertragbare Seitenkräfte. Die Begrenzung der Sollgierrate sollte daher auch unter Berücksichtigung der kritischen Querbeschleunigung bzw. der Eintrittsschwelle für die Seitenstabilitätsregelung erfolgen. Dies ist insbesondere kritisch bei Systemen, die nicht nur einer Übersteuerungstendenz, sondern auch einer übermäßigen Untersteuertendenz entgegenwirken. Während die Bekämpfung eines Übersteuerns grundsätzlich auch eine Kippgefahr reduziert, kann die Bekämpfung eines Untersteuerns eine Kippgefahr hervorrufen oder fördern. Daher sollte die Erhöhung der seitlichen Kippstabilität im Zweifelsfall Vorrang vor Vermeidung eines Untersteuerns haben.

An eine Bremsanlage zur Durchführung des erfindungsgemäßen Verfahrens zur Seitenstabilisierung werden folgende Anforderungen gestellt:

Es muß die Möglichkeit zur Durchführung einer radindividuellen aktiven Bremsung bestehen. Das heißt, daß zumindest an den einzelnen Vorderrädern eine Bremsbetätigung ohne Zutun des Fahrers möglich sein muß. Diese Bedingung ist zum Beispiel bei Fahrzeugen mit Vorderachsantrieb und Antriebsschlupfregelung gegeben. Kleine Modifkationen in der Ventilanordnung ermöglichen dann das aktive Einbremsen in jedes der Räder. Aber auch Fahrzeuge, die ein System zur Giermomentenregelung mittels Bremseneingriffs aufweisen, sind zur aktiven Bremsung ausgestattet, i.d. R. individuell für jedes Rad. Antiblockiersysteme hingegen sind normalerweise auf das Bremspedal angewiesen, um Bremsdruck aufbauen zu können. Diese Systeme können beispielsweise mit einem aktiven Bremskraftverstärker ausgestattet werden oder mit einer selbstansaugenden Pumpe mit Verbindung zum Bremsflüssigkeitsbehälter und Sperrventil in der Bremsleitung. Auch mag es sich empfehlen, eine radindividuelle Ansteuerung der Hinterachsbremsen ggf. durch zusätzliche Ventile sicherzustellen.

## Patentansprüche

1.  Verfahren zur Erhöhung der seitlichen Kippstabilität eines mindestens zweiachsigen und mindestens zweispurigen Fahrzeuges, bei dem beim Überschreiten eines ersten Schwellenwertes einer mit der Fahrzeugquerbeschleunigung korrelierenden Größe Maßnahmen zur Kippverhinderung eingeleitet werden, wobei der Schwellenwert zumindest bei Fahrtantritt den niedrigsten Wert darstellt, bei welchem bei zulässiger Fahrzeugbeladung jeglicher Art eine Kippgefahr auftritt.

2.  Verfahren nach Anspruch 1, **dadurch gekennzeichnet, daß** die korrelierende Größe die Querbeschleunigung an einer Stelle ist, die ungefähr dem Ort des Fahrzeugschwerpunktes bei unbeladenem Fahrzeug entspricht.

3.  Verfahren nach Anspruch 1, **dadurch gekennzeichnet, daß** die korrelierende Größe eine Funktion aus der Fahrzeugquerbeschleunigung und deren zeitlicher Ableitung ist.

4.  Verfahren nach einem der vorhergehenden Ansprüche, **dadurch gekennzeichnet, daß** bei Unterschreitung des ersten Schwellenwertes oder eines zweiten, niedrigeren Schwellenwertes derselben physikalischen Größe die stabilisierenden Maßnahmen abgebrochen werden.

5.  Verfahren nach einem der vorhergehenden Ansprüche, **dadurch gekennzeichnet, daß** während der Fahrt durch Beobachtung der Reaktion des Fahrzeugs auf Geschwindigkeitsänderungen eine Abschätzung erfolgt mit der Maßgabe, den ersten Schwellenwert und/oder den zweiten Schwellenwert der Schwerpunktshöhe des Fahrzeugs entsprechend anzupassen.

6.  Verfahren nach einem der vorhergehenden Ansprüche, **dadurch gekennzeichnet, daß** die Fahrzeugquerbeschleunigung ausschließlich aus den Radsensorsignalen ermittelt wird.

7.  Verfahren nach einem der vorhergehenden Ansprüche, **dadurch gekennzeichnet, daß** die Fahrzeugquerbeschleunigung aus einem Lenkwinkelsignal und Radsensorsignalen ermittelt wird.

8.  Verfahren nach einem der vorhergehenden Ansprüche, **dadurch gekennzeichnet, daß** die Maßnahme zur Kippverhinderung eine Bremsbetätigung an der vorderen Achse beinhaltet.

9.  Verfahren nach einem der vorhergehenden Ansprüche für ein Fahrzeug mit einer aktiven Fahrzeugaufhängung, **dadurch gekennzeichnet, daß** die Maßnahme zur Kippverhinderung einen Eingriff in die Fahrzeugaufhängung beinhaltet.

10. Verfahren nach einem der vorhergehenden Ansprüche für ein Fahrzeug mit einer Einrichtung zur Vermeidung exzessiven Untersteuerns, **dadurch gekennzeichnet, daß** die Maßnahme zur Kippverhinderung Vorrang vor einer Maßnahme zur Vermeidung exzessiven Untersteuerns hat.

## Claims

1.  Method for increasing the lateral tilt stability of a vehicle with at least two axles and at least two tracks in which measures are taken for preventing roll-over when a first threshold value of a variable correlating with the transversal acceleration of the vehicle is exceeded, the threshold value representing at least at the beginning of the travel the lowest value at which a risk of roll-over is encountered in the presence of a permissible load of the vehicle.

2. Method according to claim 1,
   **characterized in that** the correlating variable is the transversal acceleration in a point which corresponds approximately to the location of the vehicle's centre of gravity in an unloaded vehicle.

3. Method according to claim 1,
   **characterized in that** the correlating variable is a function resulting from the vehicle's transversal acceleration and the time derivative thereof.

4. Method according to any one of the preceding claims,
   **characterized in that** the stabilizing measures are cancelled when the same physical quantity falls below the first threshold value or a second, lower threshold value.

5. Method according to any one of the preceding claims,
   **characterized in that** during travel an estimation is executed by observing the reaction of the vehicle to changes in speed, in order to adjust the first threshold value and/or the second threshold value of the level of the centre of gravity of the vehicle.

6. Method according to any one of the preceding claims,
   **characterized in that** the transversal acceleration of the vehicle is exclusively determined on the basis of the signals of the wheel sensors.

7. Method according to any one of the preceding claims,
   **characterized in that** the transversal acceleration of the vehicle is determined from a steering angle signal and signals of the wheel sensors.

8. Method according to any one of the preceding claims,
   **characterized in that** the measure for preventing roll-over includes a brake activation on the front axle.

9. Method according to any one of the preceding claims for a vehicle with an active vehicle suspension,
   **characterized in that** the measure for preventing roll-over includes an intervention with regard to the vehicle suspension.

10. Method according to any one of the preceding claims for a vehicle with a device preventing excessive understeering,

**characterized in that** the measure for preventing roll-over has priority over a measure for preventing excessive understeering.

## Revendications

1. Procédé pour augmenter la stabilité au capotage latérale d'un véhicule d'au moins deux essieux et d'au moins deux voies, dans lequel au cas d'un dépassement d'une première valeur seuil d'une grandeur en corrélation à l'accélération du véhicule, des mesures pour empêcher un capotage sont prises, la valeur seuil au moins au début de voyage représentant la valeur la plus faible à laquelle au cas d'une charge autorisée de sorte quelconque un danger au capotage se présente.

2. Procédé selon la revendication 1,
   **caractérisé en ce que** la valeur en corrélation représente l'accélération transversale à un point à peu près correspondant au lieu du centre de gravité du véhicule à vide.

3. Procédé selon la revendication 1,
   **caractérisé en ce que** la valeur en corrélation est une fonction de l'accélération transversale du véhicule et de la dérivation de celle-ci par rapport au temps.

4. Procédé selon l'une des revendications précédentes,
   **caractérisé en ce qu'**au cas d'un dépassement vers le bas de la valeur seuil première ou d'une valeur seuil secondaire plus faible de la même grandeur physique, la mesure stabilisante est coupée.

5. Procédé selon l'une des revendications précédentes,
   **caractérisé en ce que** pendant le voyage, en observant la réaction du véhicule aux changes de vitesse, une évaluation aura lieu de sorte que la valeur seuil première et/ou de la valeur seuil secondaire de la hauteur du point de gravité du véhicule soit adaptée de manière correspondante.

6. Procédé selon l'une des revendications précédentes,
   **caractérisé en ce que** l'accélération transversale du véhicule est exclusivement déterminée par des signaux du palpeur de roue.

7. Procédé selon l'une des revendications précédentes,
   **caractérisé en ce que** l'accélération transversale du véhicule est déterminée d'un signal d'angle de direction et des signaux du palpeur de roue.

**8.** Procédé selon l'une des revendications précédentes,
   **caractérisé en ce que** la mesure d'empêcher le capotage représente une commande de frein à l'essieu avant.

**9.** Procédé selon l'une des revendications précédentes pour un véhicule, comportant une suspension de véhicule active,
   **caractérisé en ce que** la mesure d'empêcher le capotage représente un engrènement dans la suspension du véhicule.

**10.** Procédé selon l'une des revendications précédentes pour un véhicule, comportant un mécanisme à empêcher une surrégulation excessive,
   **caractérisé en ce que** la mesure pour empêcher le capotage est prioritaire vis-à-vis une mesure pour empêcher une sousrégulation excessive.

EP 1 040 033 B1

Fig. 1